# EUROPEAN PATENT APPLICATION

(11) **EP 4 134 885 A2**
(43) Date of publication of application: **15.02.2023**
(21) Application number: 22209296.7
(22) Date of filing: 24.11.2022
(51) Int. Cl.: G06N 20/00, G06N 5/02, G06N 5/04, G06N 3/04

(54) **METHOD AND APPARATUS OF RECOMMENDING DATA, ELECTRONIC DEVICE, AND MEDIUM**

(30) Priority: 26.11.2021 CN 202111428416
(71) Applicant: Beijing Baidu Netcom Science Technology Co., Ltd., Beijing 100085 (CN)
(72) Inventor: DONG, Daxiang, Beijing, 100085 (CN); WANG, Li, Beijing, 100085 (CN); SUN, Jiangwei, Beijing, 100085 (CN); XIN, Zhou, Beijing, 100085 (CN)
(74) Representative: Hoffmann Eitle

(57) **Abstract**

The present disclosure provides a method and an apparatus of recommending data, a device, a medium, and a product, which relate to a field of an artificial intelligence technology, in particular to fields of deep learning, natural language processing and intelligent recommendation technologies. The method of recommending the data includes: acquiring operation data of an operation object, wherein the operation data is associated with first content data and first target object data; determining an operation object feature, a content feature and a target object feature based on the operation data; determining a fusion feature based on the operation object feature and the content feature; and recommending second content data and second target object data in an associated manner based on the fusion feature and the target object feature.

## Description

### TECHNICAL FIELD

The present disclosure relates to a field of an artificial intelligence technology, in particular to fields of deep learning, natural language processing and intelligent recommendation technologies, and more specifically, to a method and an apparatus of recommending data, an electronic device, a medium, and a program product.

### BACKGROUND

In a related art, a content and a target object may generally be recommended in an associated manner, and the target object may include a commodity. However, a recommendation effect is poor due to an inaccurate association between the content and the target object.

### SUMMARY

The present disclosure provides a method and an apparatus of recommending data, an electronic device, a storage medium, and a program product.

According to an aspect of the present disclosure, a method of recommending data is provided, including: acquiring operation data of an operation object, wherein the operation data is associated with first content data and first target object data; determining an operation object feature, a content feature and a target object feature based on the operation data; determining a fusion feature based on the operation object feature and the content feature; and recommending second content data and second target object data in an associated manner based on the fusion feature and the target object feature.

According to another aspect of the present disclosure, an apparatus of recommending data is provided, including: a first acquisition module configured to acquire operation data of an operation object, wherein the operation data is associated with first content data and first target object data; a first determination module configured to determine an operation object feature, a content feature and a target object feature based on the operation data; a second determination module configured to determine a fusion feature based on the operation object feature and the content feature; and a first recommendation module configured to recommend second content data and second target object data in an associated manner based on the fusion feature and the target object feature.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of recommending the data described above.

According to another aspect of the present disclosure, a non-transitory computer-readable storage medium having computer instructions therein is provided, and the computer instructions are configured to cause a computer to implement the method of recommending the data described above.

According to another aspect of the present disclosure, a computer program product containing a computer program is provided, and the computer program, when executed by a processor, causes the processor to implement the method of recommending the data described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 schematically shows a system architecture of a method and an apparatus of recommending data according to embodiments of the present disclosure;
FIG. 2 schematically shows a flowchart of a method of recommending data according to embodiments of the present disclosure;
FIG. 3 schematically shows a flowchart of a method of recommending data according to other embodiments of the present disclosure;
FIG. 4 schematically shows a schematic diagram of association graph data according to other embodiments of the present disclosure;
FIG. 5 schematically shows a flowchart of a method of recommending data according to other embodiments of the present disclosure;
FIG. 6 schematically shows a schematic diagram of a method of recommending data according to embodiments of the present disclosure;
FIG. 7 schematically shows a block diagram of an apparatus of recommending data according to embodiments of the present disclosure; and
FIG. 8 shows a block diagram of an electronic device for performing a data recommendation for implementing embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following descriptions.

Terms used herein are for the purpose of describing specific embodiments only and are not intended to limit the present disclosure. The terms "comprising", "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or overly rigid way.

In a case of using the expression similar to "at least one selected from A, B, or C", it should be explained according to the meaning of the expression generally understood by those skilled in the art (for example, "a system including at least one selected from A, B, or C" should include but not be limited to a system including only A, a system including only B, a system including only C, a system including A and B, a system including A and C, a system including B and C, and/or a system including A, B and C).

Embodiments of the present disclosure provide a method of recommending data, including: acquiring operation data of an operation object. The operation data is associated with first content data and first target object data. Then, an operation object feature, a content feature and a target object feature are determined based on the operation data, and a fusion feature is determined based on the operation object feature and the content feature. Next, second content data and second target object data are recommended in an associated manner based on the fusion feature and the target object feature.

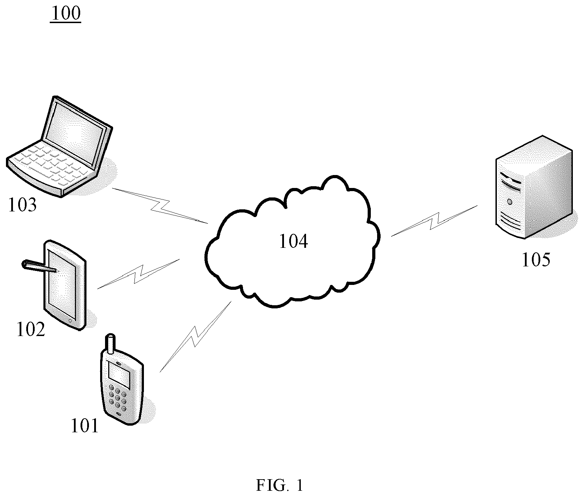

FIG. 1 schematically shows a system architecture of a method and an apparatus of recommending data according to embodiments of the present disclosure. It should be noted that FIG. 1 is merely an example of the system architecture to which embodiments of the present disclosure may be applied to help those skilled in the art understand the technical content of the present disclosure, but it does not mean that embodiments of the present disclosure may not be applied to other devices, systems, environments or scenarios.

As shown in FIG. 1, a system architecture 100 according to such embodiments may include clients 101, 102 and 103, a network 104, and a server 105. The network 104 is a medium for providing a communication link between the clients 101, 102, 103 and the server 105. The network 104 may include various connection types, such as wired and/or wireless communication links, optical fiber cables, or the like.

The clients 101, 102 and 103 may be used by a user to interact with the server 105 through the network 104 to receive or send messages or the like. The clients 101, 102 and 103 may be installed with various communication client applications, such as shopping applications, web browser applications, search applications, instant messaging tools, email clients and/or social platform software, etc. (for example only).

The clients 101, 102 and 103 may be various electronic devices having display screens and supporting web browsing, including but not limited to smart phones, tablet computers, laptop computers, desktop computers, or the like. The clients 101, 102 and 103 of embodiments of the present disclosure may run application programs, for example.

The server 105 may be a server providing various services, such as a background management server (for example only) that provides a support for a website browsed by the user using the clients 101, 102 and 103. The background management server may analyze and process received data such as a user request, and feed back a processing result (such as a web page, an information, or data acquired or generated according to the user request) to the clients. In addition, the server 105 may be a cloud server, that is, the server 105 may have a cloud computing function.

It should be noted that the method of recommending the data provided by embodiments of the present disclosure may generally be performed by the server 105. Accordingly, the apparatus of recommending the data provided by embodiments of the present disclosure may be generally provided in the server 105. The method of recommending the data provided by embodiments of the present disclosure may also be performed by a server or server cluster different from the server 105 and capable of communicating with the clients 101, 102, 103 and/or the server 105. Accordingly, the apparatus of recommending the data provided by embodiments of the present disclosure may also be provided in a server or server cluster different from the server 105 and capable of communicating with the clients 101, 102, 103 and/or the server 105.

In an example, the server 105 may acquire operation data from the clients 101, 102 and 103 through the network 104, and determine an operation object feature, a content feature and a target object feature based on the operation data, then determine a fusion feature based on the operation object feature and the content feature, and finally recommend content data and target object data in an associated manner based on the fusion feature and the target object feature. For example, the content data and the target object data may be sent in an associated manner to the clients 101, 102 and 103.

It should be understood that the number of clients, network and server shown in FIG. 1 are merely schematic. According to implementation needs, any number of client, network and server may be provided.

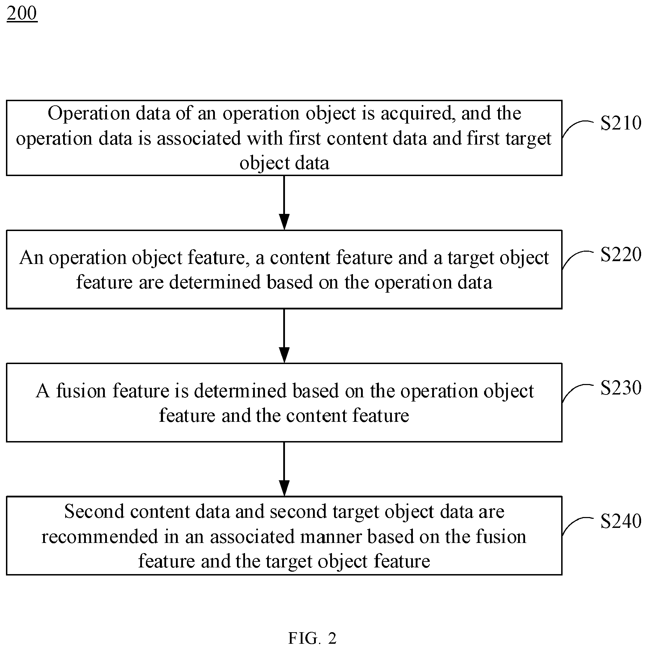

Embodiments of the present disclosure provide a method of recommending data. The method of recommending the data according to exemplary embodiments of the present disclosure will be described below with reference to FIG. 2 to FIG. 6 in combination with the system architecture of FIG. 1. The method of recommending the data of embodiments of the present disclosure may be performed by, for example, the server shown in FIG. 1, and the server shown in FIG. 1 is, for example, the same as or similar to an electronic device below.

FIG. 2 schematically shows a flowchart of a method of recommending data according to embodiments of the present disclosure.

As shown in FIG. 2, a method 200 of recommending data of embodiments of the present disclosure may include, for example, operation S210 to operation S240.

In operation S210, operation data of an operation object is acquired, and the operation data is associated with first content data and first target object data.

In operation S220, an operation object feature, a content feature and a target object feature are determined based on the operation data.

In operation S230, a fusion feature is determined based on the operation object feature and the content feature.

In operation S240, second content data and second target object data are recommended in an associated manner based on the fusion feature and the target object feature.

Exemplarily, the first content data or the second content data may include, for example, an article, news, or other data. The first target object data or the second target object data may include, for example, a commodity, a product, or other data. Here, unless otherwise specified, content data may refer to the first content data, the second content data, third content data (described below) or historical content data (described below), and target object data may refer to the first target object data, the second target object data, third target object data (described below) or historical target object data (described below). In general, the content data and the target object data may be recommended in an associated manner. For example, when the content data is recommended, the target object data associated with the content data may be recommended together. Since the content data and the target object data are associated, the target object data may generally be concerned by the operation object when the operation object browses the content data.

The operation data of the operation object may be, for example, for the first content data or the first target object data recommended in an associated manner. The operation data may include, for example, clicking data, browsing data, data generated by performing a resource transfer on the first target object data, and so on.

Since the operation data indicates an intrinsic relationship between the operation object, the first content data and the first target object data, it is possible to determine the operation object feature, the content feature and the target object feature based on the operation data. The operation object feature, the content feature and the target object feature may be, for example, associated with each other.

Next, the operation object feature and the content feature may be fused to obtain a fusion feature, and the second content data and the second target object data may be recommended in an associated manner based on a similarity between the fusion feature and the target object feature. The recommended second content data corresponds to the content feature, and the recommended second target object data corresponds to the target object feature.

According to embodiments of the present disclosure, the operation object feature, the content feature and the target object feature are determined based on the operation data, then the fusion feature is determined based on the operation object feature and the content feature, and the second content data and the second target object data are recommended in an associated manner based on the similarity between the fusion feature and the target object feature. It may be understood that richer fusion feature and target object feature associated with each other may be obtained based on the operation data, so that a richness and a recommendation effect of the recommended data may be improved by recommending the second content data and the second target object data based on the fusion feature and the target object feature associated with each other. In addition, when the recommended second content data is browsed by the operation object, the second target object data associated with the second content data may also be concerned by the operation object, so that a degree of concern on the target object is improved.

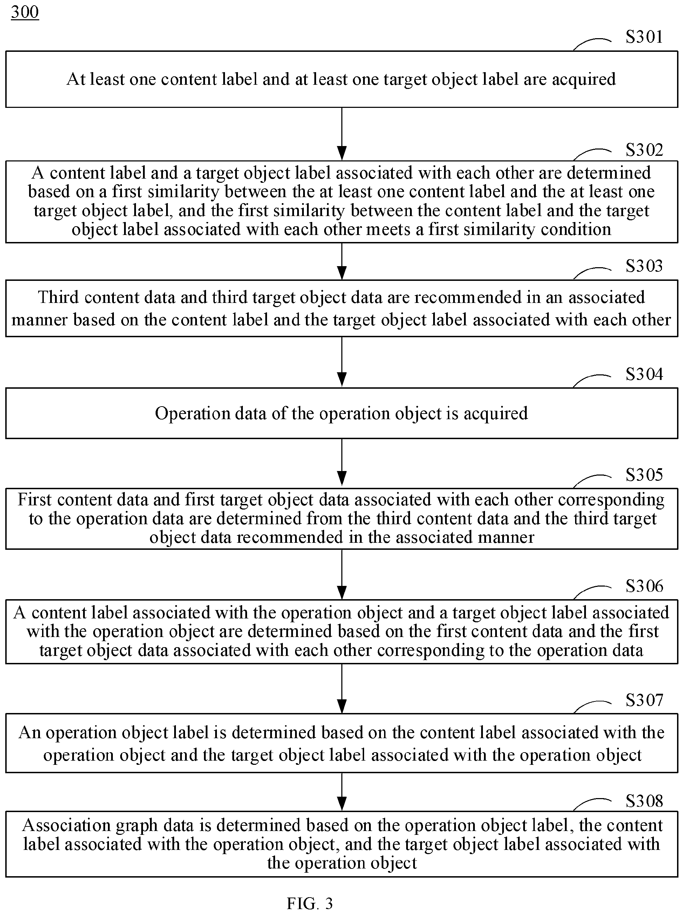

FIG. 3 schematically shows a flowchart of a method of recommending data according to other embodiments of the present disclosure.

As shown in FIG. 3, a method 300 of recommending data of embodiments of the present disclosure may include, for example, operation S301 to operation S308.

In operation S301, at least one content label and at least one target object label are acquired.

Exemplarily, for at least one historical content data stored in a content library, a data processing may be performed on the at least one historical content data by using at least one selected from a first natural language processing model or a second deep learning model, so as to obtain at least one content label respectively corresponding to the at least one historical content data.

For example, taking the historical content data including articles as an example, a label extraction may be performed on a title, a body and an introduction information of each article by using the first natural language processing model, so as to obtain structured data. The structured data may include, for example, an article title, an article publication time, an author name, an article category, and so on. In addition, it is also possible to process a content of the article, an image in the article, comment data for the article, and so on by using the second deep learning model, so as to obtain description data for the article. The structured data and the description data may be used as the content label corresponding to the article.

Exemplarily, for at least one historical target object data stored in a target object library, a data processing may be performed on the at least one historical target object data by using at least one selected from a second natural language processing model or a third deep learning model, so as to obtain at least one target object label respectively corresponding to the at least one historical target object data.

For example, taking the historical target object data including commodity data as an example, a label extraction may be performed on a name, a creative information and a category information of each commodity data by using the second natural language processing model, so as to obtain structured data. The structured data may include, for example, a color, a price, a brand, etc. of a commodity. In addition, it is also possible to process an image of the commodity, comment data for the commodity, and so on by using the third depth learning model, so as to obtain description data for the commodity. The structured data and the description data may be used as the target object label corresponding to the commodity data.

In operation S302, a content label and a target object label associated with each other are determined based on a first similarity between the at least one content label and the at least one target object label, and the first similarity between the content label and the target object label associated with each other meets a first similarity condition.

For example, each content label and each target object label may be converted into vectors, and then a distance between the vector of each content label and the vector of each target object label may be calculated by means of semantic matching. The distance between the vectors may represent the first similarity between the content label and the target object label. Then, the content label and the target object label with a large similarity may be determined based on the distance between the vectors, and the content label and the target object label with the large similarity may be used as the content label and the target object label associated with each other.

In operation S303, third content data and third target object data are recommended in an associated manner based on the content label and the target object label associated with each other.

Exemplarily, the third content data is, for example, at least part of the historical content data, and the third target object data is, for example, at least part of the historical target object data.

For example, the content label and the target object label associated with each other indicate a high probability of an association between the corresponding third content data and the corresponding third target object data. Therefore, it is highly possible that the third target object data may be of interest to the operation object interested in the third content data. Then, the third content data and the third target object data may be recommended in an associated manner based on the content label and the target object label associated with each other. For example, when the third content data is recommended, the associated third target object data may also be recommended, so that a degree of concern on the third target object data by the operation object browsing the third content data may be improved.

In operation S304, operation data of the operation object is acquired.

In operation S305, first content data and first target object data associated with each other corresponding to the operation data are determined from the third content data and the third target object data recommended in the associated manner.

Exemplarily, the first content data is, for example, at least part of the third content data, and the first target object data is, for example, at least part of the third target object data. The operation data may represent, for example, operations such as clicking, browsing, and transferring a virtual resource performed by the operation object on the first content data or the first target object data. Therefore, the first content data and the first target object data associated with each other corresponding to the operation data may be determined from the third content data and the third target object data recommended in the associated manner.

Since the first content data and the first target object data associated with each other are determined based on the operation data, it is highly possible that the first target object data is of interest to the operation object interested in the first content data. Therefore, the association between the determined first content data and the determined first target object data is more accurate.

In operation S306, a content label associated with the operation object and a target object label associated with the operation object are determined based on the first content data and the first target object data associated with each other corresponding to the operation data.

For example, the first content label and the first target object label associated with each other may be represented by a "content label-target object label pair". After a plurality of "content label-target object label pairs" with a large similarity are determined in the above-mentioned operation S302, the third content data and the third target object data may be recommended in an associated manner based on the plurality of "content label-target object label pairs" with the large similarity. A part of the third content data and the third target object data (that is, the first content data and the first target obj ect data) recommended in the associated manner may be operated by the operation object to generate the operation data. A part of the "content label-target object label pairs" concerned by the operation object may be determined based on the operation data.

In operation S307, an operation object label is determined based on the content label associated with the operation object and the target object label associated with the operation object.

In operation S308, association graph data is determined based on the operation object label, the content label associated with the operation object, and the target object label associated with the operation object.

For the part of "content label-target object label pairs" concerned by the operation object, the content label and the target object label concerned by the operation object may be used as the operation object label. Then, the association graph data may be determined based on the operation object label, the content label concerned by the operation object, and the target object label concerned by the operation object.

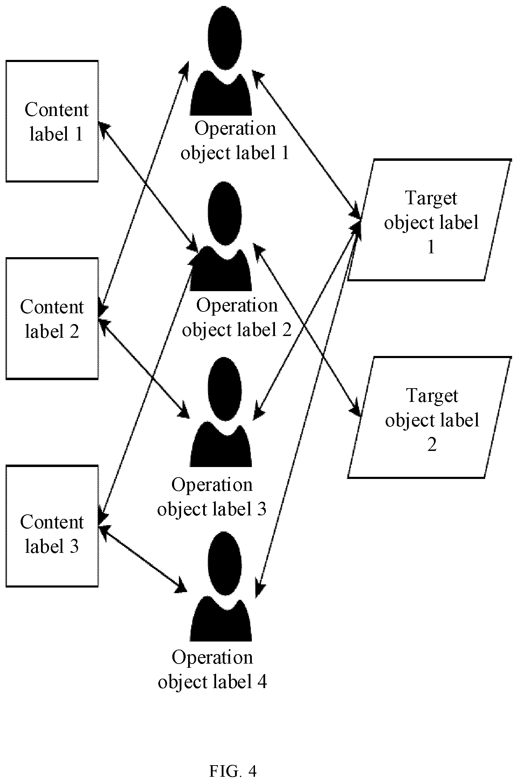

FIG. 4 schematically shows a schematic diagram of association graph data according to other embodiments of the present disclosure.

As shown in FIG. 4, a bipartite graph of "operation object label-content label" and "operation object label-target object label" is constructed based on the operation data of the operation object by using a knowledge graph technology. The bipartite graph is an association graph.

For example, if the third content data and the third target object data corresponding to a "content label 2-target object label 1 pair" are recommended in an associated manner, and an operation is performed by an operation object corresponding to an operation object label 1 on the third content data and the third target object data recommended in the associated manner, it indicates that the third content data and the third target object data recommended are concerned by the operation object corresponding to the operation object label 1, then the third content data and the third target object data associated with each other concerned by the operation object may be determined as the first content data and the first target object data associated with each other. Therefore, the content label 2 and the target object label 1 may be used as the operation object label 1. In this way, a plurality of operation object labels may be obtained. Then, a bipartite graph (an association graph) is constructed based on the operation object labels, the content labels, and the target object labels. As shown in the bipartite graph, the operation object label 1 is associated with the content label 2 and the target object label 1.

According to embodiments of the present disclosure, feature data is obtained through the association graph, and an accuracy of the feature data may be improved, so that an effect of a data recommendation based on the feature data may be improved.

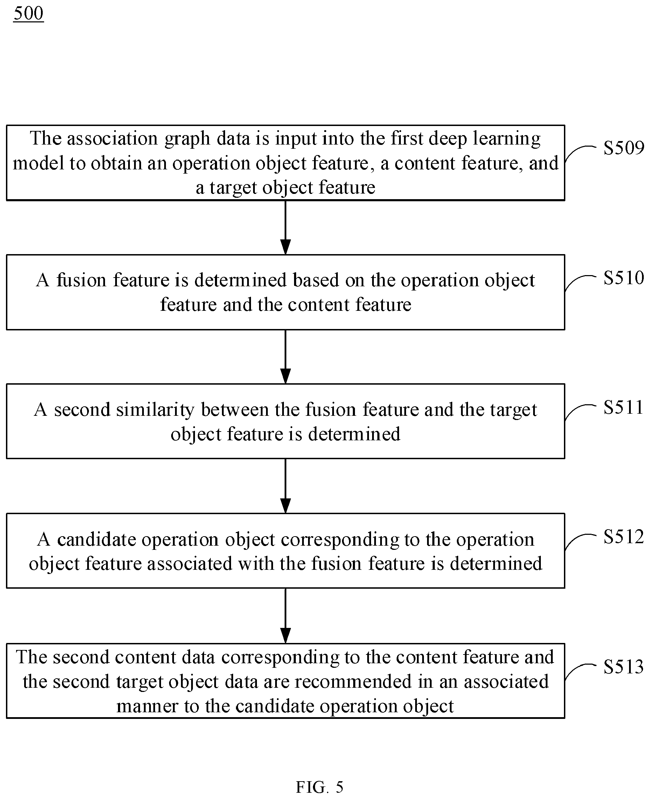

FIG. 5 schematically shows a flowchart of a method of recommending data according to other embodiments of the present disclosure.

As shown in FIG. 5, on the basis of embodiments disclosed in FIG. 3, a method 500 of recommending data of embodiments of the present disclosure may further include, for example, operation S509 to operation S513. Operation S509 to operation S513 may be performed, for example, after operation S308 shown in FIG. 3 is performed.

In operation S509, the association graph data is input into a first deep learning model to obtain an operation object feature, a content feature, and a target object feature.

Since the content label, the target object label and the operation object label are obtained based on semantics, it may be difficult for the labels, to some extent, to express an intrinsic relationship between the content, the target object and the operation object. In view of this, it is possible to input the association graph data into a trained first depth learning model for recognition. The intrinsic relationship between the association graph data may be recognized by the first depth learning model, so as to obtain the operation object feature, the content feature and the target object feature. The operation object feature, the content feature and the target object feature may be, for example, feature vectors. The first deep learning model may include, for example, a graph neural network.

The operation object feature may indicate, for example, the intrinsic relationship between the operation object and the content and the intrinsic relationship between the operation object and the target object. The content feature may indicate, for example, the intrinsic relationship between the content and the operation object and the intrinsic relationship between the content and the target object. The target object feature may indicate, for example, the intrinsic relationship between the target object and the content and the intrinsic relationship between the target object and the operation object.

In operation S510, a fusion feature is determined based on the operation object feature and the content feature.

In operation S511, a second similarity between the fusion feature and the target object feature is determined.

For example, the fusion feature may be obtained by fusing the operation object feature and the content feature. In an example, the vector corresponding to the operation object feature and the vector corresponding to the content feature may be added to obtain the fusion feature.

In a case that the second similarity meets a second similarity condition, for a content feature associated with the fusion feature, second content data corresponding to the content feature and second target object data are recommended in an associated manner.

For example, the second similarity may be represented by a distance between vectors. A large similarity between the fusion feature and the target object feature indicates a large degree of association between the second content data corresponding to the content feature and the second target object data corresponding to the target object feature, and the second target object data may be of interest to the operation object interested in the second content data. Therefore, the second content data and the second target object data of interest to the operation object may be recommended in an associated manner.

In embodiments of the present disclosure, a small number of "content label-target object label pairs" may be obtained based on semantics, and it may be difficult to deeply reflect the intrinsic association between the content data and the target object data. Therefore, it is possible to determine a large number of fusion features and target object features with a large similarity through the association graph data, and recommend the second content data and the second target object data associated with each other based on the large number of fusion features and target object features associated with each other, so that a recommendation effect and a degree of concern on the second target object data may be improved.

In another example, a data recommendation may be performed for the operation object, which may specifically include operation S512 to operation S513.

In operation S512, a candidate operation object corresponding to an operation object feature associated with the fusion feature is determined.

In operation S513, the second content data corresponding to the content feature and the second target object data are recommended in an associated manner to the candidate operation object.

Since the fusion feature is obtained based on the content feature and the operation object feature, for the operation object feature corresponding to the fusion feature, the operation object corresponding to the operation object feature may be determined as the candidate operation object.

Then, when the second content data and the second target object data are recommended in an associated manner, the second content data and the second target object data may be recommended to the candidate operation object.

According to embodiments of the present disclosure, since the fusion feature and the operation object feature are associated, when the second content data and the second target object data associated with each other are recommended based on the similarity between the fusion feature and the target object feature, the data may be recommended to the candidate operation object, so that the data recommendation is more targeted.

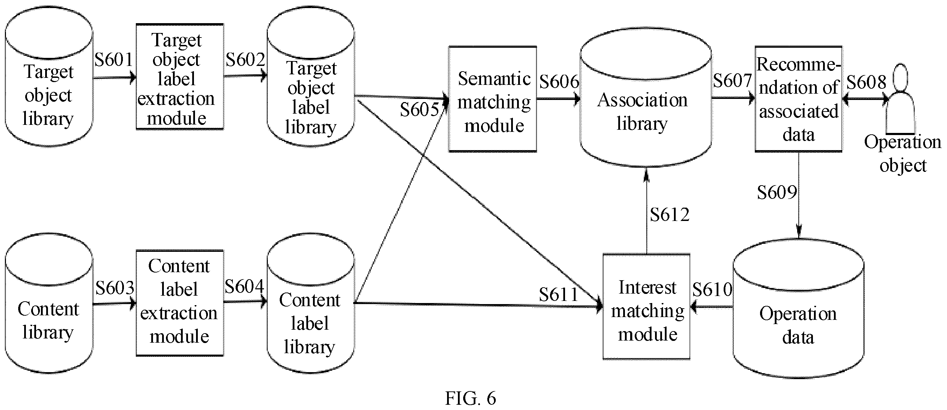

FIG. 6 schematically shows a schematic diagram of a method of recommending data according to embodiments of the present disclosure.

As shown in FIG. 6, embodiments of the present disclosure include, for example, operation S601 to operation S612.

In operation S601, for historical target object data stored in a target object library, the historical target object data is processed by a target object label extraction module to obtain a target object label. The target object label extraction module may include, for example, a natural language processing model and a deep learning model.

In operation S602, the extracted target object label is stored in a target object label library.

In operation S603, for historical content data stored in a content library, the historical content data is processed by a content label extraction module to obtain a content label. The content label extraction module may include, for example, a natural language processing model and a deep learning model.

In operation S604, the extracted content label is stored in a content label library.

In operation S605, the target object label and the content label are processed based on a semantic matching module, so as to obtain an associated "content label-target object label pair".

The semantic matching module may include, for example, a trained semantic matching model, which may have two functions, for example. One function is to vectorize the target object label and the content label, and the other is to perform a similarity matching between a vector corresponding to the target object label and a vector corresponding to the content label, and determine the content label and the target object label with a large similarity as the "content label-target object label pair". In this way, the "content label-target object label pair" is associated based on semantics.

In operation S606, the associated "content label-target object label pair" is stored into an association library.

In operation S607, third content data and third target object data are recommended in an associated manner based on the "content label-target object label pair" in the association library.

In operation S608, an operation performed by the operation object on first content data and first target object data recommended in an associated manner is received.

For example, the first content data is at least part of the third content data, and the first target object data is at least part of the third target object data.

In operation S609, operation data is obtained based on the operation performed by the operation object on the recommended data.

In operation S610, the operation data is sent to an interest matching module.

In operation S611, a fusion feature and a target object feature associated with each other are obtained by the interest matching module based on the operation data, the target object label and the content label.

For example, for the first content data and the first target object data associated with each other corresponding to the operation data, the operation object label may be determined based on the content feature and the target object label. Then, association graph data is determined based on the operation object label, the content label associated with the operation object label, and the target object label associated with the operation object. Then, the operation object feature, the content feature and the target object feature are obtained based on the association graph data, and the fusion feature is determined based on the operation object feature and the content feature. The operation object feature indicates an interest information of the operation object for the content and the target object.

In operation S612, the fusion feature and the target object feature associated with each other are stored in the association library, so that the second content data and the second target object data are recommended in an associated manner based on the fusion feature and the target object feature associated with each other.

Exemplarily, the fusion feature and the target obj ect feature associated with each other are stored in the association library, so that a content of the association library is enriched, and an effect of the data recommendation is improved. For example, a candidate operation object corresponding to the operation object feature associated with the fusion feature is determined based on the similarity between the fusion feature and the target object feature, and the content data and the target object data are recommended to the candidate operation object in an associated manner, so that the data recommendation may be more targeted.

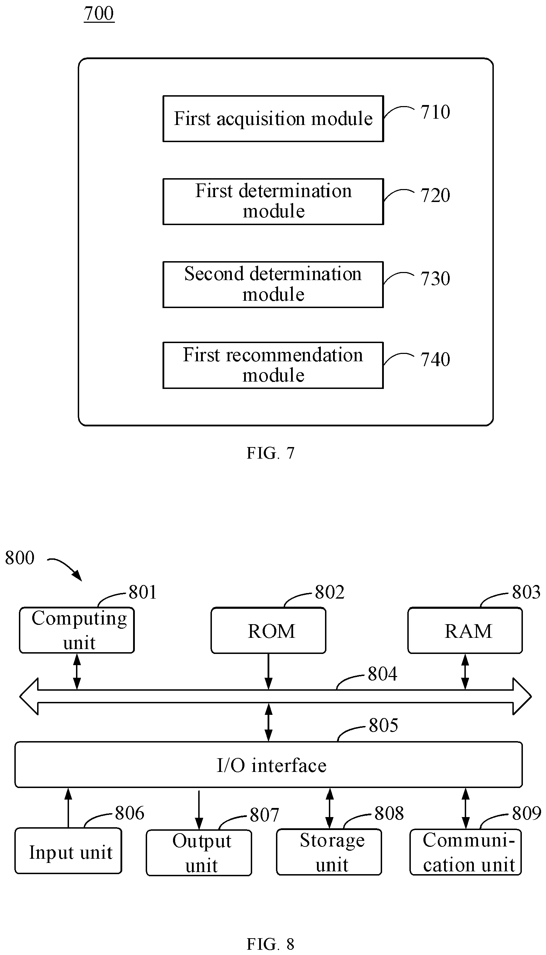

FIG. 7 schematically shows a block diagram of an apparatus of recommending data according to embodiments of the present disclosure.

As shown in FIG. 7, an apparatus 700 of recommending data of embodiments of the present disclosure includes, for example, a first acquisition module 710, a first determination module 720, a second determination module 730, and a first recommendation module 740.

The first acquisition module 710 may be used to acquire operation data of an operation object, and the operation data is associated with first content data and first target object data. According to embodiments of the present disclosure, the first acquisition module 710 may perform, for example, the operation S210 described above with reference to FIG. 2, which will not be described in detail here.

The first determination module 720 may be used to determine an operation object feature, a content feature and a target object feature based on the operation data. According to embodiments of the present disclosure, the first determination module 720 may perform, for example, the operation S220 described above with reference to FIG. 2, which will not be described in detail here.

The second determination module 730 may be used to determine a fusion feature based on the operation object feature and the content feature. According to embodiments of the present disclosure, the second determination module 730 may perform, for example, the operation S230 described above with reference to FIG. 2, which will not be described in detail here.

The first recommendation module 740 may be used to recommend second content data and second target object data in an associated manner based on the fusion feature and the target object feature. According to embodiments of the present disclosure, the first recommendation module 740 may perform, for example, the operation S240 described above with reference to FIG. 2, which will not be described in detail here.

According to embodiments of the present disclosure, the apparatus 700 may further include a second acquisition module used to acquire at least one content label and at least one target object label. The first determination module 720 may include a first determination sub-module, a second determination sub-module, a third determination sub-module, and an input sub-module. The first determination sub-module may be used to determine, based on the operation data, a content label associated with the operation object and a target object label associated with the operation object from the at least one content label and the at least one target object label. The second determination sub-module may be used to determine an operation object label based on the content label associated with the operation object and the target object label associated with the operation object. The third determination sub-module may be used to determine association graph data based on the operation object label, the content label associated with the operation object, and the target object label associated with the operation obj ect. The input sub-module may be used to input the association graph data into a first deep learning model to obtain the operation object feature, the content feature and the target object feature.

According to embodiments of the present disclosure, the apparatus 700 may further include a third determination module and a second recommendation module. The third determination module may be used to determine a content label and a target object label associated with each other, based on a first similarity between the at least one content label and the at least one target object label, and the first similarity between the content label and the target object label associated with each other meets a first similarity condition. The second recommendation module may be used to recommend third content data and third target object data in an associated manner based on the content label and the target object label associated with each other. The first content data is at least part of the third content data, and the first target object data is at least part of the third target object data.

According to embodiments of the present disclosure, the first determination sub-module includes a first determination unit and a second determination unit. The first determination unit may be used to determine first content data and first target object data corresponding to the operation data from the third content data and the third target object data recommended in the associated manner, and the first content data and the first target object data are associated with each other. The second determination unit may be used to determine, based on the first content data and the first target object data associated with each other corresponding to the operation data, the content label associated with the operation object and the target object label associated with the operation object.

According to embodiments of the present disclosure, the first recommendation module 740 includes a fourth determination sub-module and a recommendation sub-module. The fourth determination sub-module may be used to determine a second similarity between the fusion feature and the target object feature. The recommendation sub-module may be used to recommend, for a content feature associated with the fusion feature, the second content data corresponding to the content feature and the second target object data in the associated manner, in response to the second similarity meeting a second similarity condition.

According to embodiments of the present disclosure, the recommendation sub-module includes a third determination unit and a recommendation unit. The third determination unit may be used to determine a candidate operation object corresponding to an operation object feature associated with the fusion feature. The recommendation unit may be used to recommend the second content data corresponding to the content feature and the second target object data to the candidate operation object in the associated manner.

According to embodiments of the present disclosure, the second acquisition module includes a first processing sub-module and a second processing sub-module. The first processing sub-module may be used to perform data processing on at least one historical content data by using at least one selected from a first natural language processing model or a second deep learning model, so as to obtain at least one content label corresponding to each historical content data. The second processing sub-module may be used to perform data processing on at least one historical target object data by using at least one selected from a second natural language processing model and a third deep learning model, so as to obtain at least one target object label corresponding to each historical target object data.

In the technical solution of the present disclosure, an acquisition, a storage, a use, a processing, a transmission, a provision, a disclosure and an application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

According to embodiments of the present disclosure, the present disclosure further provides an electronic device, a readable storage medium, and a computer program product.

FIG. 8 shows a block diagram of an electronic device for performing a data recommendation for implementing embodiments of the present disclosure.

FIG. 8 shows a schematic block diagram of an exemplary electronic device 800 for implementing embodiments of the present disclosure. The electronic device 800 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 includes a computing unit 801 which may perform various appropriate actions and processes according to a computer program stored in a read only memory (ROM) 802 or a computer program loaded from a storage unit 808 into a random access memory (RAM) 803. In the RAM 803, various programs and data necessary for an operation of the electronic device 800 may also be stored. The computing unit 801, the ROM 802 and the RAM 803 are connected to each other through a bus 804. An input/output (I/O) interface 805 is also connected to the bus 804.

A plurality of components in the electronic device 800 are connected to the I/O interface 805, including: an input unit 806, such as a keyboard, or a mouse; an output unit 807, such as displays or speakers of various types; a storage unit 808, such as a disk, or an optical disc; and a communication unit 809, such as a network card, a modem, or a wireless communication transceiver. The communication unit 809 allows the electronic device 800 to exchange information/data with other devices through a computer network such as Internet and/or various telecommunication networks.

The computing unit 801 may be various general-purpose and/or dedicated processing assemblies having processing and computing capabilities. Some examples of the computing units 801 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 801 executes various methods and steps described above, such as the method of recommending the data. For example, in some embodiments, the method of recommending the data may be implemented as a computer software program which is tangibly embodied in a machine-readable medium, such as the storage unit 808. In some embodiments, the computer program may be partially or entirely loaded and/or installed in the electronic device 800 via the ROM 802 and/or the communication unit 809. The computer program, when loaded in the RAM 803 and executed by the computing unit 801, may execute one or more steps in the method of recommending the data described above. Alternatively, in other embodiments, the computing unit 801 may be configured to perform the method of recommending the data by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of recommending data, comprising:
acquiring (S210, S304) operation data of an operation object, wherein the operation data is associated with first content data and first target object data;
determining (S220) an operation object feature, a content feature and a target object feature based on the operation data;
determining (S230, S510) a fusion feature based on the operation object feature and the content feature; and
recommending (S240) second content data and second target object data in an associated manner based on the fusion feature and the target object feature.

2. The method according to claim 1, further comprising:
acquiring (S301) at least one content label and at least one target object label;
wherein the determining (S220) an operation object feature, a content feature and a target object feature based on the operation data comprises:
determining, based on the operation data, a content label associated with the operation object and a target object label associated with the operation object from the at least one content label and the at least one target object label;
determining (S307) an operation object label based on the content label associated with the operation object and the target object label associated with the operation object;
determining (S308) association graph data based on the operation object label, the content label associated with the operation object, and the target object label associated with the operation object; and
inputting (S509) the association graph data into a first deep learning model to obtain the operation object feature, the content feature and the target object feature.

3. The method according to claim 2, further comprising: before acquiring (S210, S304) the operation data of the operation object,
determining (S302) a content label and a target object label associated with each other, based on a first similarity between the at least one content label and the at least one target object label, wherein the first similarity between the content label and the target object label associated with each other meets a first similarity condition; and
recommending (S303) third content data and third target object data in an associated manner based on the content label and the target object label associated with each other, wherein the first content data is at least part of the third content data, and the first target object data is at least part of the third target object data.

4. The method according to claim 2 or 3, wherein the determining, based on the operation data, a content label associated with the operation object and a target object label associated with the operation object from the at least one content label and the at least one target object label comprises:
determining (S305) the first content data and the first target object data corresponding to the operation data from the third content data and the third target object data recommended in the associated manner, wherein the first content data and the first target object data are associated with each other; and
determining (S306), based on the first content data and the first target object data associated with each other corresponding to the operation data, the content label associated with the operation object and the target object label associated with the operation object.

5. The method according to claim 1, wherein the recommending (S240) second content data and second target object data in an associated manner based on the fusion feature and the target object feature comprises:
determining (S511) a second similarity between the fusion feature and the target object feature; and
recommending, for a content feature associated with the fusion feature, the second content data corresponding to the content feature and the second target object data in the associated manner, in response to the second similarity meeting a second similarity condition.

6. The method according to claim 5, wherein the recommending the second content data corresponding to the content feature and the second target object data in the associated manner comprises:
determining (S512) a candidate operation object corresponding to an operation object feature associated with the fusion feature; and
recommending (S513) the second content data corresponding to the content feature and the second target object data to the candidate operation object in the associated manner.

7. The method according to claim 2, wherein the acquiring (S301) at least one content label and at least one target object label comprises:
performing data processing on at least one historical content data by using at least one selected from a first natural language processing model or a second deep learning model, so as to obtain at least one content label corresponding to each historical content data; and
performing data processing on at least one historical target object data by using at least one selected from a second natural language processing model and a third deep learning model, so as to obtain at least one target object label corresponding to each historical target object data.

8. An apparatus of recommending data, comprising:
a first acquisition module (710) configured to acquire operation data of an operation object, wherein the operation data is associated with first content data and first target object data;
a first determination module (720) configured to determine an operation object feature, a content feature and a target object feature based on the operation data;
a second determination module (730) configured to determine a fusion feature based on the operation object feature and the content feature; and
a first recommendation module (740) configured to recommend second content data and second target object data in an associated manner based on the fusion feature and the target object feature.

9. The apparatus according to claim 8, further comprising:
a second acquisition module configured to acquire at least one content label and at least one target object label;
wherein the first determination module (720) comprises:
a first determination sub-module configured to determine, based on the operation data, a content label associated with the operation object and a target object label associated with the operation object from the at least one content label and the at least one target object label;
a second determination sub-module configured to determine an operation object label based on the content label associated with the operation object and the target object label associated with the operation object;
a third determination sub-module configured to determine association graph data based on the operation object label, the content label associated with the operation object, and the target object label associated with the operation object; and
an input sub-module configured to input the association graph data into a first deep learning model to obtain the operation object feature, the content feature and the target object feature.

10. The apparatus according to claim 9, further comprising:
a third determination module configured to determine a content label and a target object label associated with each other, based on a first similarity between the at least one content label and the at least one target object label, wherein the first similarity between the content label and the target object label associated with each other meets a first similarity condition; and
a second recommendation module configured to recommend third content data and third target object data in an associated manner based on the content label and the target object label associated with each other, wherein the first content data is at least part of the third content data, and the first target object data is at least part of the third target object data,
preferably, wherein the first determination sub-module comprises:
a first determination unit configured to determine first content data and first target object data corresponding to the operation data from the third content data and the third target object data recommended in the associated manner, wherein the first content data and the first target object data are associated with each other; and
a second determination unit configured to determine, based on the first content data and the first target object data associated with each other corresponding to the operation data, the content label associated with the operation object and the target object label associated with the operation object.

11. The apparatus according to claim 8, wherein the first recommendation module (740) comprises:
a fourth determination sub-module configured to determine a second similarity between the fusion feature and the target object feature; and
a recommendation sub-module configured to recommend, for a content feature associated with the fusion feature, the second content data corresponding to the content feature and the second target object data in the associated manner, in response to the second similarity meeting a second similarity condition,
preferably, wherein the recommendation sub-module comprises:
a third determination unit configured to determine a candidate operation object corresponding to an operation object feature associated with the fusion feature; and
a recommendation unit configured to recommend the second content data corresponding to the content feature and the second target object data to the candidate operation object in the associated manner.

12. The apparatus according to claim 9, wherein the second acquisition module comprises:
a first processing sub-module configured to perform data processing on at least one historical content data by using at least one selected from a first natural language processing model or a second deep learning model, so as to obtain at least one content label corresponding to each historical content data; and
a second processing sub-module configured to perform data processing on at least one historical target object data by using at least one selected from a second natural language processing model and a third deep learning model, so as to obtain at least one target object label corresponding to each historical target object data.

13. An electronic device (800), comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 7.

14. A non-transitory computer-readable storage medium having computer instructions therein, wherein the computer instructions are configured to cause a computer to implement the method of any one of claims 1 to 7.

15. A computer program product containing a computer program, wherein the computer program, when executed by a processor, causes the processor to implement the method of any one of claims 1 to 7.
